# EUROPÄISCHE PATENTSCHRIFT

(11) **EP 1 841 956 B1**
(45) Veröffentlichungstag und Bekanntmachung des Hinweises auf die Patenterteilung: **09.07.2008**
(21) Anmeldenummer: 05817086.1
(22) Anmeldetag: 18.11.2005
(51) Int. Cl.: F01N 3/20, B01D 53/94, B01D 53/90

(54) **ABGASNACHBEHANDLUNGSVERFAHREN UND VORRICHTUNG HIERZU**
EXHAUST GAS SUBSEQUENT PROCESSING METHOD AND METHOD THEREFOR
PROCEDE ET DISPOSITIF POUR LE POST-TRAITEMENT DE GAZ D'ECHAPPEMENT

(30) Priorität: 17.01.2005 DE 102005002318
(43) Veröffentlichungstag der Anmeldung: 10.10.2007
(73) Patentinhaber: ROBERT BOSCH GMBH, 70442 Stuttgart (DE)
(72) Erfinder: BARCIN, Buelent, 73240 Wendlingen Am Neckar (DE)
(86) Internationale Anmeldenummer: PCT/EP2005/056050
(87) Internationale Veröffentlichungsnummer: WO 2006/074833

(56) Entgegenhaltungen:
- EP-A- 1 283 332
- WO-A-00/75643
- WO-A-20/05024194
- US-A- 5 522 218
- US-A- 5 968 464
- US-A1- 2004 098 978
- US-B1- 6 273 120

## Beschreibung

### Stand der Technik

Die Erfindung geht aus von einem Verfahren bzw. einer Vorrichtung zum Nachbehandeln von Abgasen einer Brennkraftmaschine nach der Gattung der unabhängigen Ansprüche.

Es ist schon aus der DE 199 46 902 A1 bekannt, eine Hamstoff-Wasser-Lösung zur Abgasentstickung nachmotorisch in den Abgastrakt einzubringen und dabei eine Rückflußleitung von einer Förderpumpe zurück zu einem Hamstofftank vorzusehen, die zum Abbau eines eventuell vorhandenen Überdrucks in der Hamstoffleitung beziehungsweise zur Entlüftung der Hamstoffleitung eingesetzt wird, bei der jedoch insbesondere in gefrierkritischen Situationen, insbesondere außerhalb von Zeiten, in denen das Reduktionsmittel in den Abgastrakt eindosiert wird, kein kontinuierlicher Wärmeaustausch zwischen der Hamstoff-Wasser-Lösung und gefriergefährdeten Stellen der Abgasnachbehandlungsvorrichtung vorgesehen ist

Weiterhin ist aus der DE 102 54 981 A1 bekannt, aus reduktionsmittelführenden Leitungen dort noch enthaltenes Reduktionsmittel nach der Dosierung mittels Druckluft zu entfernen.

Die US 2004/0098978 A1 beschreibt eine Zirkulation eines Reduktionsmittels durch einen Injektor.

### Vorteile der Erfindung

Das erfindungsgemäße Verfahren beziehungsweise die erfindungsgemäße Vorrichtung mit den kennzeichnenden Merkmalen der unabhängigen Ansprüche haben demgegenüber den Vorteil, eine einfache, platzsparende und effektive Alternative zum Gefrierschutz einer Abgasnachbehandlungsvorrichtung bereitzustellen, die auf mechanischer Seite weitgehend mit bereits vorhandenen Installationen realisiert und in einfacher Weise softwaremässig implementiert werden kann. Insbesondere auch bei kleineren Dosiermengen und bei kaltem Fahrtwand stellt eine Reaktionsmittelzirkulation einen guten Schutz vor einem Eingefrieren dar. Dabei ist es vorteilhaft, eine Zirkulation in einem Fordermodul vorzusehen, das über eine Zufuhrleitung mit einer Dosiervonichtung verbunden ist. Hierdurch wird auf kleinem Raum ein effektiver Gefrierschutz insbesondere an Verbindungsbereichen bzw. Verbindungssteckern gewährleistet, die Verbindungen zum Reaktionsmittelbebälter herstellen. Des weiteren ist es energiesparend, einen Zirkulationsbetrieb nur dann vorzusehen, wenn ein gewisser Temperaturschwellenwert unterschritten wird, ab dem die Gefahr besteht, dass an Bord befindliches flüssiges Reaktionsmittel an gefriergefahrdeten Stellen einfriert.

Durch die in den abhängigen Ansprüchen aufgeführten Maßnahmen sind vorteilhafte Weiterbildungen und Verbesserungen des im unabhängigen Anspruch angegebenen Verfahrens beziehungsweise der angegebenenVorrichtung zur Abgasnachbehandlung möglich.

Vorteilhaft ist es ferner, insbesondere außerhalb des Dosierbetriebs und/oder bei ausgeschalteter Brennkraftmaschine eine Reaktionsmittelzirkulation zu veranlassen, so dass der eigentliche Dosierbetrieb nicht durch eventuell aufgrund des Zirkulationsbetriebs entstehenden Druckschwankungen in den Leitungen gestört wird bzw. auch parkendem Fahrzeug ein Gefrierschutz gewährleistet ist.

Vorteilhaft ist es ferner, einen Schutz vor einer Entladung der Bordbatterie vorzusehen, um zu jedem Zeitpunkt ein Wiederanlassen der Brennkraftmaschine sicherzustellen.

### Zeichnung

Ausführungsbeispiele der Erfindung sind in der Zeichnung dargestellt und in der nachfolgenden Beschreibung näher erläutert. Es zeigen Figur 1 eine aus der DE 199 46 902 bekannte Abgasnachbehandlungsanordnung, Figur 2a eine Vorrichtung zur reaktionsmittelgestützten Abgasnachbehandlung ohne Druckluftunterstützung mit einem Fördermodul, Figur 2b eine schematische Darstellung einer Abgasnachbehandlungsvorrichtung, Figur 3 eine weitere Vorrichtung zur Abgasnachbehandlung, Figur 4 eine Vorrichtung mit einem alternativen Fördermodul, Figur 5 ein Flussdiagramm und Figur 6 eine weitere Vorrichtung zur druckluftlosen dosierten Reaktionsmitteleinbringung in den Abgastrakt mit Mitteln zum Ausblasen des Reaktionsmittels.

### Beschreibung der Ausführungsbeispiele

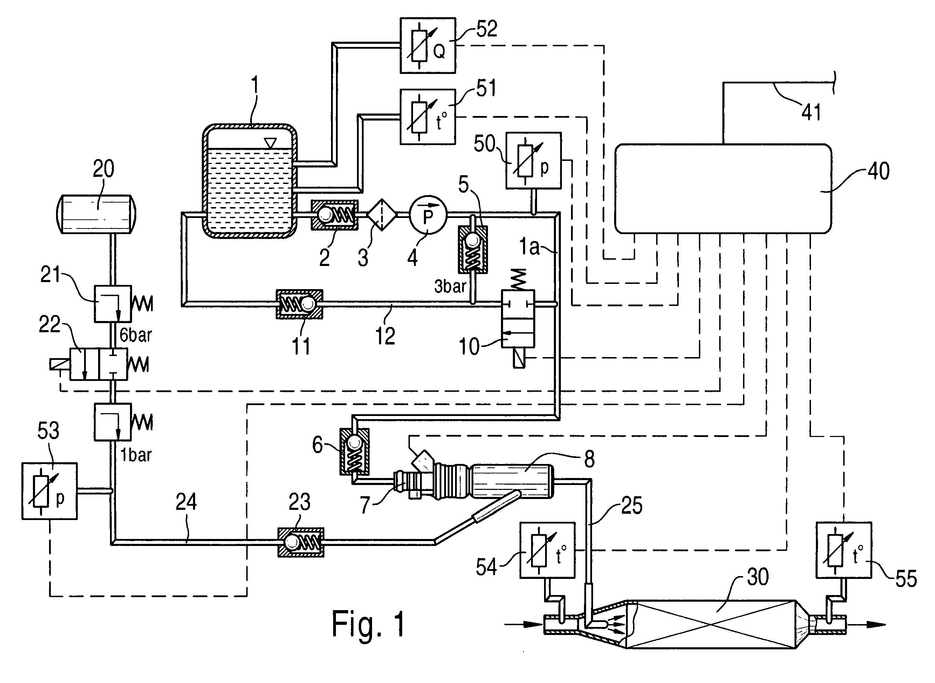

In Figur 1 ist eine Vorrichtung zur Nachbehandlung von Abgasen dargestellt Mit 1 ist ein Harnstofftank bezeichnet, aus welchem eine Hamstoff-Wasser-Lösung über eine Leitung 1a, beispielsweise eine Schlauchleitung, mit einem Rückschlagventil 2 und einem als Filtersieb ausgeführten Filter 3 von einer Förderpumpe 4 angesaugt und über ein weiteres Rückschlagventil 6 zu einem Dosierventil 7 gefördert wird. Das Dosierventil 7 dosiert die erforderliche Menge an Hamstoff-Wasser-Lösung in eine Mischkammer 8. Eine eventuell auftretende Überströmmenge der Hamstoff-Wasser-Lösüng ist über einen Druckregler 5 und ein weiteres Rückschlagventil 11 durch eine Rücklaufleitung 12 in den Harnstofftank 1 zurückführbar. Eine eventuell notwendige Entlüftung der Leitung 1a ist über einen Entlüftungskreislauf mit einem Entlüftungsventil 10 durchführbar. Mit 20 ist ferner ein Druckluftbehälter bezeichnet, aus weichem Druckluft über einen Druckbegrenzer 21, ein 2/2-Wegeventil 22 und ein Rückschlagventil 23 in die Mischkammer einbringbar ist Durch Vorsehen des Rückschlagventils 23, welches beispielsweise als Kugelventil oder Flachsitzventil ausgebildet sein kann, kann ein Rückströmen eines Reduktionsmittel-Luft-Gemisches aus der Mischkammer in die Druckluftleitung 24 hinaus verhindert werden. Hierdurch ist die Gefahr einer Kontamination eines mit der Druckluftleitung 24 kommunizierenden Druckluft-Bordnetzes gegenüber herkömmlichen Systemen stark reduziert.

In der Mischkammer 8 wird unter Beaufschlagung der Harnstoff-Wasser-Lösung mittels der Druckluft ein Aerosol erzeugt, welches über eine Aerosolleitung 25 in einen Katalysator 30 eingebracht wird. Ein Steuergerät 40 erfaßt hierbei Signale, die von einem übergeordneten Motorsteuergerät über eine CAN-Datenleitung 41 empfangen werden, sowie die Signale von Druck-, Temperatur- bzw. Füllstandssensoren 50 bis 55, deren Funktionsweise an sich bekannt ist und hier nicht weiter erläutert wird Das Steuergerät 40 berechnet aus diesen Informationen eine Harnstoff-Dosiermenge, welche einem den Katalysator 30 durchströmenden Abgas zugegeben werden soll.

Das Steuergerät 40 regelt mit Hilfe der beschriebenen Magnetventile den Druck in der Druckluftleitung 24 und überwacht ferner den Hamstoff-Wasser-Lösungsdruck. Das Steuergerät 40 erkennt Abweichungen und Fehler, speichert diese und bringt sie durch ein (nicht gezeigtes) Diagnosegerät, beispielsweise an einem PC, zur Anzeige.

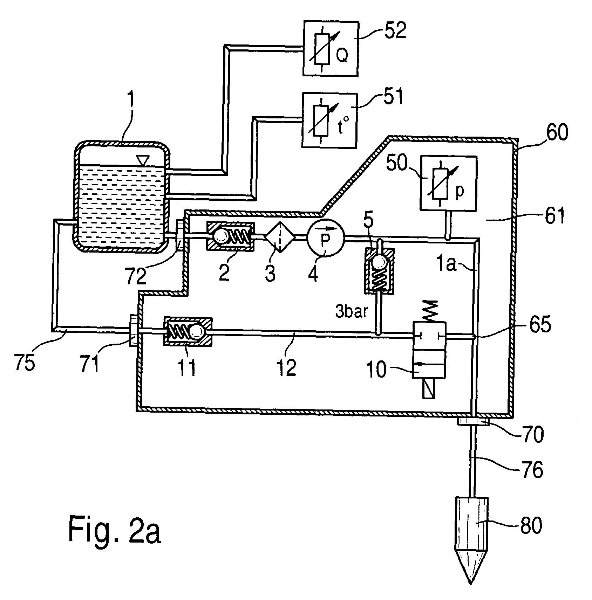

Figur 2a zeigt eine Vorrichtung zur Abgasnachbehandlung, bei der gleiche Bestandteile wie bei der Anordnung nach Figur 1 mit gleichen Bezugszeichen markiert sind und nicht nochmals beschrieben werden. Die elektrischen Verbindungen zu einem Steuergerät 40 bestehen wie bei der Anordnung nach Figur 1, sind hier jedoch nicht dargestellt. Rückschlagventil 2, Filter 3, Förderpumpe 4, Druckregler 5, Drucksensor 50, Leitung 1a, Entlüftungsventil 10, Rücklaufleitung 12 und das weitere Rückschlagventil 11 sind baulich in einem Fördermodul ("supply module") 61 integriert, das von einem Gehäuse 60 umgeben ist. Der Harnstofftank ist hierbei mit dem Rückschlagventil 2 über einen Verbindungsstecker 72 verbunden, der die vom Tank wegführende Leitung mit der sich innerhalb des Fördermoduls befindlichen, zum Rückschlagventil 2 führenden Leitung la zusammenschließt. In ähnlicher Weise ist das weitere Rückschlagventil 11 in der Rücklaufleitung 12 über einen weiteren Verbindungsstecker 71 mit einer zum Harnstofftank führenden Fortsetzung 75 der Rücklaufleitung, beispielsweise in Form eines Schlauches, verbunden. Die Leitung 1a ist hinter dem Abzweigungspunkt 65, von dem aus die Rücklaufleitung 12 abzweigt, über einen weiteren Verbindungsstecker 70 mit einer Zufuhrleitung 76 zusammengeschlossen, die zu einem Dosierventil 80 führt.

Im Unterschied zur Anordnung nach Figur 1 erfolgt die Zuführung der Harnstoff-Wasser-Lösung in die Abgasleitung ohne Unterstützung durch Druckluft. Ist das Ventil 80 geöffnet, wird direkt die Harnstoff-Wasser-Lösung ohne Vermischung mit Druckluft in den Abgastrakt eingespritzt. Hierzu kann das Dosierventil nahe der Abgasleitung angeordnet werden bzw. es kann dessen Öffnung unmittelbar in die Abgasleitung hineinragen.

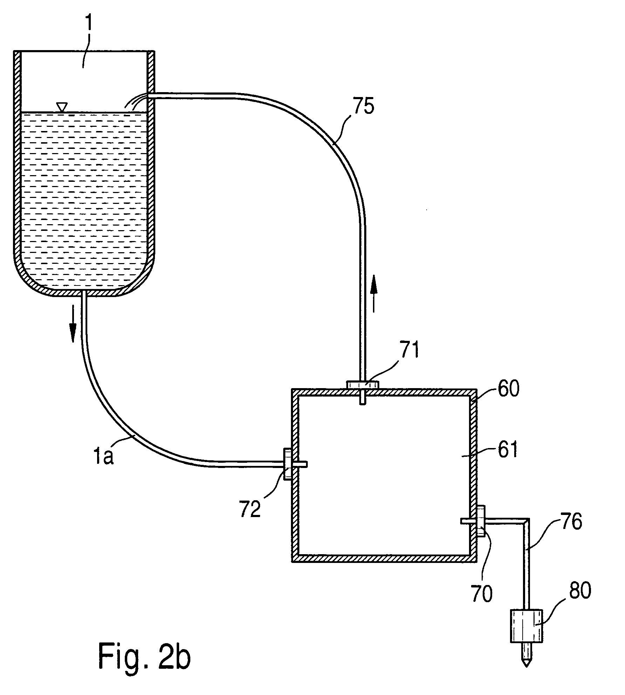

In Figur 2b ist nochmals schematisch eine Anordnung mit einem Fördermodul 61 mit einem Gehäuse 60 dargestellt, das über drei Schlauchverbindungen bzw. Verbindungsstecker 70, 71 und 72 mit einem Tank 1 für eine Harnstoff-Wasser-Lösung sowie mit dem Dosierventil 80 in Verbindung steht.

Das Fördermodul veranlasst beispielsweise über eine in ihr integrierte Förderpumpe 4 (vgl. Figur 2a) ein Ansaugen von Harnstoff-Wasser-Lösung aus dem Tank 1 über die Leitung 1a und den Verbindungsstecker 72. Dadurch steht Harnstoff-Wasser-Lösung zur Weiterleitung über Verbindungsstecker 70 und Zufuhrleitung 76 an das Dosierventil 80 bereit, das, wenn es geöffnet wird, eine Zufuhr von Harnstoff-Wasser-Lösung in den Abgastrakt gewährleistet. Insbesondere dann, wenn das Dosierventil 80 geschlossen ist, wird durch das Fördermodul 61 ein Transport von Harnstoff-Wasser-Lösung fortgeführt. Dabei wird das Reaktionsmittel über die Leitung 1a weiterhin angesaugt, aber über den Verbindungsstecker 71 und den Rückfluß-Schlauch 75 zum Harnstofftank 1 zurückgeführt, so dass eine Flüssigkeitszirkulation aufrechterhalten werden kann.

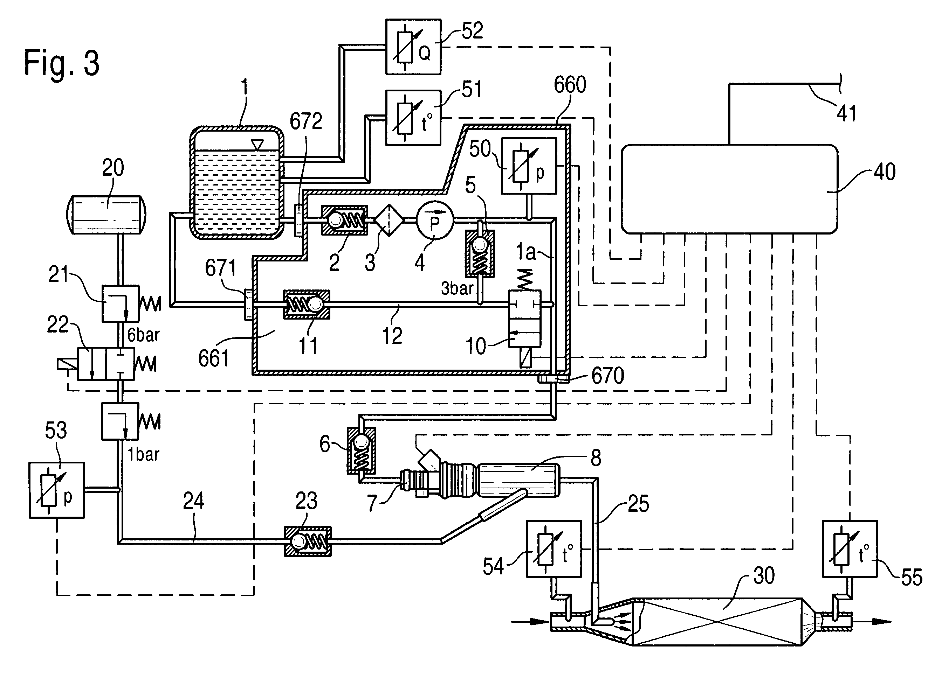

Figur 3 zeigt eine Anordnung mit bereits in Figur 1 beschriebenen Bestandteilen, bei der druckluftunterstützt unter Bildung eines Aerosols eine Harnstoff-Wasser-Lösung dem Abgastrakt zugeführt wird. Hierbei sind Rückschlagventil 2, Filter 3, Förderpumpe 4, Druckregler 5, Drucksensor 50, Leitung 1a, Entlüftungsventil 10, Rücklaufleitung 12 und das weitere Rückschlagventil 11 baulich in einem Fördermodul ("supply module") 661 integriert, das von einem Gehäuse 660 umgeben ist. Dabei sind in ähnlicher Weise zum Aufbau nach Figur 2b die zur Pumpe führende Leitung, die Rücklaufleitung und die Leitung von der Pumpe in Richtung Dosierventil 7 über jeweilige Verbindungsstecker 672, 671 und 670 mit mit dem Harnstofflank bzw. dem Dosierventil verbundenen Leitungen zusammengeschlossen.

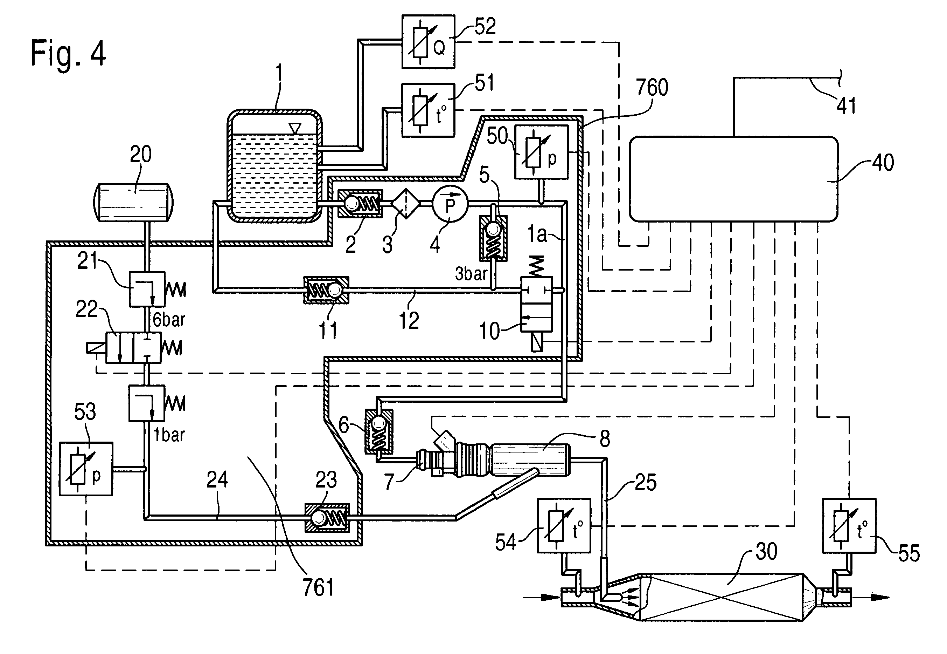

Figur 4 zeigt eine Anordnung mit gleichen Bauteilen wie in Figur 3 beschrieben, bei der jedoch zusätzlich zu dem Rückschlagventil 2, dem Filter 3, der Förderpumpe 4, dem Druckregler 5, dem Drucksensor 50, der Leitung 1a, dem Entlüftungsventil 10, der Rücklaufleitung 12 und dem weiteren Rückschlagventil 11 auch die Bauteile 21 bis 24 und 53 in einem Fördermodul 761 integriert sind, das von einem Gehäuse 760 umgeben ist.

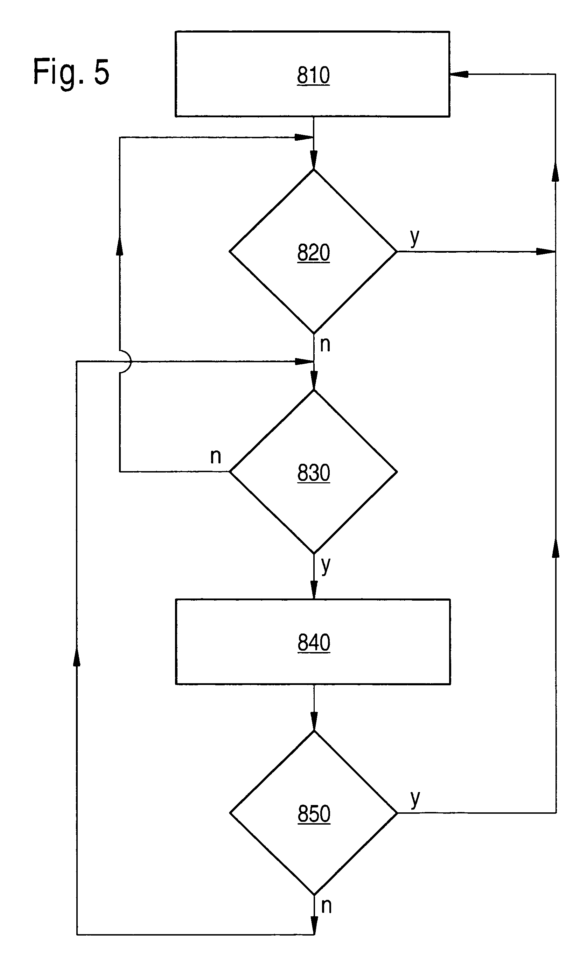

Mit den in Figur 2a bis 4 beschriebenen Vorrichtungen, also sowohl bei druckluftunterstützten Reaktionsmitteleinspritzungen als auch bei druckluftlosen Einspritzungen, kann ein Verfahren durchgeführt werden, wie es schematisch in Figur 5 in Form eines Flussdiagramms dargestellt ist. Dieses Verfahren kann hardwaremässig oder softwaremässig im Steuergerät 40 implementiert sein. Dem Verfahrensschritt 810, dem normalen Dosierbetrieb, folgt eine Abfrage 820, ob weiterhin Dosierbedarf besteht. Die Abfrage 830 macht ein weiteres Vorgehen von der momentan herrschenden Außentemperatur abhängig. Verfahrensschritt 840 umfaßt Maßnahmen zum Gefrierschutz, und die Abfrage 850 stellt fest, ob wieder Reaktionsmittel in den Abgastrakt dosiert werden soll.

Beim normalen Dosierbetrieb (Verfahrensschritt 810) wird über das Dosierventil 7 bzw. 80 Reaktionsmittel nachmotorisch dem Abgastrakt zugeführt. Hierbei wird ständig abgefragt (Abfrage 820), ob weiterhin Dosierbedarf besteht bzw. ob weiterhin dosiert werden darf. Dosiert werden darf beispielsweise dann nicht mehr, wenn der Harnstofftank 1 nicht mehr hinreichend gefüllt ist, um bei weiterer Entnahme zwecks Dosierung noch einen weiter unten näher beschriebenen Zirkulationsbetrieb sicherstellen zu können. Auch in einem Fehlerfall darf nicht mehr dosiert werden, zum Beispiel wenn die Katalysatortemperaturmessung unplausible Werte ergibt. Zusätzlich kann vorgesehen sein, vor dem eigentlichen Start des Dosierbetriebs die Katalysatortemperatur zu überwachen und den normalen Dosierbetrieb erst zu starten, wenn der Katalysator hinreichend warm ist. Falls kein Dosierbedarf mehr besteht oder falls nicht mehr dosiert werden darf, wird in einem weiteren Schritt in Abfrage 830 die Temperatur der Harnstoff-Wasser-Lösung im Harnstofftank oder alternativ die Außentemperatur abgefragt. Falls ein bestimmter Schwellenwert nicht unterschritten wird (Temperatur der Harnstoff-Wasser-Lösung unterhalb von - 5 Grad Celsius bzw. Außentemperatur unterhalb von - 11 Grad Celsius), wird zur Abfrage 820 zurückgekehrt. Wird jedoch der betreffende TemperaturSchwellenwert unterschritten, werden im Verfahrensschritt 840 nachfolgend näher beschriebene Maßnahmen zum Gefrierschutz eingeleitet. Hierbei wird ständig abgefragt (Abfrage 850), ob wieder dosiert werden soll. Falls nein, wird zur Abfrage 830 zurückgesprungen, ansonsten zu Verfahrensschritt 810.

Bei der Anordnung gemäß Figur 2a bzw. 3 wird hierbei die Pumpe 4 bei geschlossenem Dosierventil 7 und bei geschlossenem Entlüftungsventil 10 so angesteuert, dass sie den Schwellenwert von 3 bar des Druckreglers 5 überwindet, so dass ein Zirkulationskreislauf des Reaktionsmittels entsteht, der die Verbindungsstecker 71 und 72 (bzw. 671 und 672) ständig mit Reaktionsmittel durchspült.

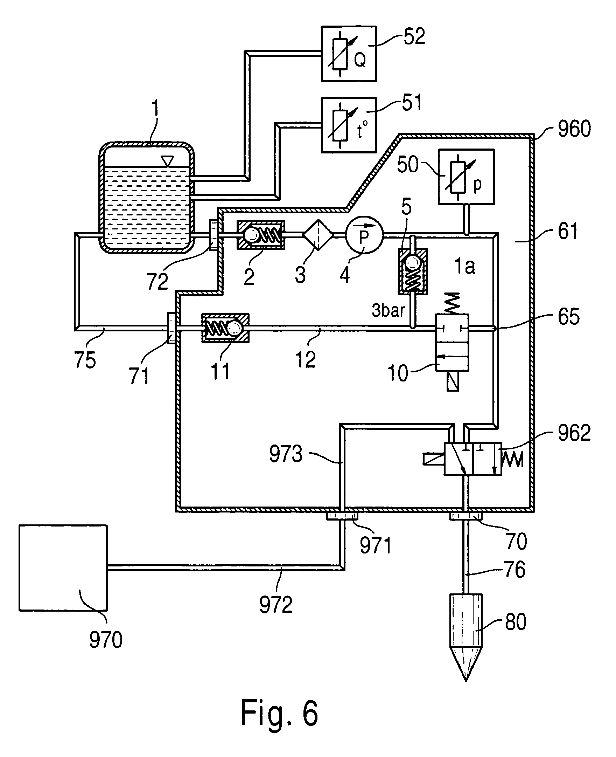

Alternativ kann bei geschlossenem Dosierventil das Entlüftungsventil 10 geöffnet und die Pumpe 4 angeschaltet werden bzw. bleiben, so dass bereits bei einem Druck unterhalb von 3 bar ein Zirkulationskreislauf bereitgestellt werden kann. Werden diese Verbindungsstecker durchspült, kann ein Eingefrieren des Reaktionsmittels insbesondere außerhalb des Dosierbetriebs gerade auch an diesen hierfür gefährdeten Stellen vermieden werden. Diese Stellen sind ohne besondere Maßnahmen zum Gefrierschutz besonders anfällig für das Eingefrieren des Reaktionsmittels, weil diese aufgrund der Verbindung zum Gehäuse des Fördermoduls einen besonders guten Kältekontakt zur Umgebung aufweisen. Alternativ kann das Druckregelventil 5 auch durch ein elektrisch ansteuerbares Ventil ersetzt werden, das im Dosierbetrieb die Funktion eines Druckregelventils übernimmt und im Falle eines geschlossenen Dosierventils zur Einrichtung eines Zirkulationskreislaufs geöffnet werden kann. Alternativ kann das soeben genannte elektrisch ansteuerbare Ventil auch zusätzlich zum Druckregler 5 vorgesehen und zu diesem parallel geschaltet sein. Zusätzlich zur Einrichtung eines Zirkulationskreislaufs können auch weitere Maßnahmen vorgesehen sein, um auch insbesondere den Bereich des Verbindungssteckers 70 (Fig. 2a) bzw. 670 (Fig. 3) vor einem Eingefrieren von Reaktionsmittel zu schützen. Diese fakultativen weiteren Maßnahmen hinsichtlich des Verbindungssteckers 70 bzw. 670 werden anhand der nachfolgenden Figur 6 beschrieben.

Das Gefrierschutzverfahren unter Einsatz eines Zirkulationskreislaufs kann auch nach einem Ausschalten der Brennkraftmaschine fortgesetzt werden. In einer weiteren alternativen Ausführungsform kann darauf verzichtet werden, die Temperatur der Außenluft oder des im Reaktionsmittelbehälter befindlichen Reaktionsmittels abzufragen, um in jedem Fall außerhalb des Dosierbetriebs, wahlweise auch nach Abschalten der Brennkraftmaschine, einen die Dosiervorrichtung bzw. das Dosierventil nicht erfassenden Zirkulationskreislauf einzurichten. Es kann ebenfalls vorgesehen sein, dass die Zirkulation nur dann bzw. solange erfolgt, wenn bzw. wie das elektrische Bordnetz des Kraftfahrzeugs der Brennkraftmaschine hinreichende Energiereserven zum Wiederanlassen der Brennkraftmaschine aufweist.

Figur 6 illustriert eine Weiterentwicklung eines Systems gemäß Figur 2a zur druckluftlosen Einspritzung von Reaktionsmittel, insbesondere einer Harnstoff-Wasser-Lösung, in den Abgastrakt. Dabei weist das Fördermodul 960 im Unterschied zum Fördermodul 60 gemäß Figur 2a zusätzlich ein Umschaltventil 962 sowie eine Druckluftleitung 973 auf, die das Umschaltventil mit einem Druckluft-Verbindungsstecker 971 verbindet. Das Umschaltventil verbindet (über das nicht näher dargestellte elektrische Steuergerät ansteuerbar) den Verbindungsstecker 70 bzw. das Dosierventil 80 wahlweise mit der mit der Pumpe 4 verbundenen Leitung 1a oder mit dem Verbindungsstecker 971. An diesem Verbindungsstecker 971 ist das Fördermodul 960 über eine weitere Druckluftleitung 972 an einer elektrisch ansteuerbaren Druckluftzufuhreinrichtung 970 angeschlossen, die ebenfalls über das genannte el. Steuergerät angesteuert werden kann. Diese Druckluftzufiihreinrichtung umfasst beispielsweise eine Druckluftpatrone und ein Mittel zur Dosierung der Druckluft, insbesondere ein elektrisch ansteuerbares Druckluftventil. Alternativ kann das Mittel zur Dosierung der Druckluft auch von einer bereits an Bord des Kraftfahrzeugs befindlichen Druckluftquelle mit Druckluft gespeist werden, beispielsweise von einem Druckspeicher oder druckgeregelt direkt von einem Kompressor kommend.

Eine Anordnung nach Figur 6 erlaubt neben einer Einrichtung eines Zirkulationskreislaufs zum Gefrierschutz der Verbindungsstecker 71 und 72, wie in der Beschreibung zur Figur 5 erläutert, zusätzlich eine Maßnahme zum Gefrierschutz des Verbindungssteckers 70. Dazu wird die Verbindung zwischen der Leitung 1a und der Zufuhrleitung 76 mittels des Umschaltventils 962 getrennt, und es wird, wie in der Figur 6 dargestellt, das Dosierventil über die Druckluftleitungen 972 und 973 mit der Druckluftzufuhreinrichtung 970 verbunden. Das Mittel zur Dosierung der Druckluft wird angesteuert und noch in der Zufuhrleitung 76 bzw. sich im Bereich des Verbindungssteckers 70 befindliches Reaktionsmittel wird in den Abgastrakt ausgeblasen. Nach einer gewissen Zeit wird die Druckluftzufuhr abgestellt, das Umschaltventil bleibt jedoch in der beschriebenen Stellung zur Spülung des Dosierventils, um ein Nachlaufen von Reaktionsmittel aus der Leitung 1a in den Bereich des Verbindungssteckers 70 zu verhindern. Erst bei Wiederaufnahme des Dosierbetriebs wird das Umschaltventil wieder umgeschaltet, so dass das Dosierventil wieder mit Reaktionsmittel beaufschlagt werden kann. Damit bleibt auch der Bereich des Verbindungssteckers 70 vor Gefrierschäden geschützt.

## Patentansprüche

1. Verfahren zum Nachbehandeln von Abgasen einer Brennkraftmaschine unter Verwendung eines in die Abgase einzubringenden Reaktionsmittels, insbesondere eines Reduktionsmittels, bei dem das Reaktionsmittel mittels einer Fördervorrichtung (4), insbesondere einer Pumpe, aus einem Reaktionsmittelbehälter (1) zu einer Dosiervorrichtung (7; 80), insbesondere einem Dosierventil, gepumpt wird, so dass nach Öffnung der Dosiervorrichtung das Reaktionsmittel dosiert in eine Abgasleitung der Brennkraftmaschine eingebracht werden kann, wobei über eine Rücklaufleitung (12, 75) Reaktionsmittel von der Fördervorrichtung (4) zum Reaktionsmittelbehälter (1) zurückbefördert werden kann, **dadurch gekennzeichnet, dass** das Reaktionsmittel derart zwischen der Fördervorrichtung (4) und dem Reaktionsmittelbehälter (1) zirkulieren kann, dass insbesondere bei geschlossener Dosiervorrichtung ein Einfrieren des Reaktionsmittels verhindert wird, wobei die Zirkulation zwischen dem Reaktionsmittelbehälter und einem die Fördervorrichtung enthaltenden Fördermodul (61; 661; 761) erfolgt, wobei das Fördermodul über eine nicht von der Zirkulation erfasste Zufuhrleitung (76) mit der Dosiervorrichtung (7; 80) verbunden ist, und wobei die Zirkulation nur erfolgt, wenn die Temperatur der Außenluft oder des im Reaktionsmittelbehälter befindlichen Reaktionsmittels einen Schwellenwert unterschreitet (830).

2. Verfahren nach Anspruch 1, **dadurch gekennzeichnet, dass** die Zirkulation kontinuierlich erfolgt.

3. Verfahren nach Anspruch 1 oder 2, **dadurch gekennzeichnet, dass** im Anschluß an einen Dosierbetrieb die Zufuhrleitung (76) zur Dosiervorrichtung (7; 80) mit einem Gas, insbesondere Druckluft, durchspült wird, um nach der Dosierung in der Zufuhrleitung verbliebenes Reaktionsmittel auszutreiben.

4. Verfahren nach einem der vorhergehenden Ansprüche, **dadurch gekennzeichnet, dass** die Zirkulation zu Zeiten erfolgt, in denen kein Reaktionsmittel in die Abgasleitung eingebracht wird.

5. Verfahren nach einem der vorhergehenden Ansprüche, **dadurch gekennzeichnet, dass** die Zirkulation auch bei ausgeschalteter Brennkraftmaschine erfolgen kann.

6. Verfahren nach Anspruch 5, **dadurch gekennzeichnet, dass** die Zirkulation nur dann bzw. solange erfolgt, wenn bzw. wie das elektrische Bordnetz des Kraftfahrzeugs der Brennkraftmaschine hinreichende Energiereserven zum wederanlassen der Brennkraftmaschine aufweist.

7. Verfahren nach einem der vorhergehenden Ansprüche, **dadurch gekennzeichnet, dass** das Reaktionsmittel ein Reduktionsmittel ist.

8. Verfahren nach Anspruch 7, **dadurch gekennzeichnet, dass** das Reduktionsmittel eine Harnstoff-Wasser-Lösung ist.

9. Vorrichtung zum Nachbehandeln von Abgasen einer Brennkraftmaschine unter Verwendung eines in die Abgase einzubringenden Reaktionsmittels, insbesondere eines Reduktionsmittels, eingerichtet mit Mitteln (40) zur Durchführung eines Verfahrens nach einem der vorhergehenden Ansprüche.

## Claims

1. Method for the aftertreatment of exhaust gases of an internal combustion engine using a reagent, in particular a reducing agent, which is to be introduced into the exhaust gases, in which method the reagent is pumped by means of a feed device (4), in particular a pump, from a reagent tank (1) to a metering device (7; 80), in particular a metering valve, such that the reagent can be introduced in a metered fashion into an exhaust line of the internal combustion engine according to the opening of the metering device, with it being possible for reagent to be returned from the feed device (4) to the reagent tank (1) via a return line (12, 75), **characterized in that** the reagent can circulate between the feed device (4) and the reagent tank (1) in such a way that freezing of the reagent is prevented in particular when the metering device is closed, with the circulation taking place between the reagent tank and a feed module (61; 661; 761) which contains the feed device, with the feed module being connected by means of a supply line (76), which is not encompassed by the circulation, to the metering device (7; 80), and wherein the circulation takes place only if the temperature of the external air or of the reagent situated in the reagent tank falls below a threshold value (830).

2. Method according to Claim 1, **characterized in that** the circulation takes place continuously.

3. Method according to Claim 1 or 2, **characterized in that**, after a metering operation, the supply line (76) to the metering device (7; 80) is flushed through with a gas, in particular compressed air, in order to expel reagent remaining in the supply line after the metering.

4. Method according to one of the preceding claims, **characterized in that** the circulation takes place at times at which no reagent is introduced into the exhaust line.

5. Method according to one of the preceding claims, **characterized in that** the circulation can also take place when the internal combustion engine is switched off.

6. Method according to Claim 5, **characterized in that** the circulation takes place only when or for as long as the on-board electrical system of the motor vehicle of the internal combustion engine has sufficient energy reserves to re-start the internal combustion engine.

7. Method according to one of the preceding claims, **characterized in that** the reagent is a reducing agent.

8. Method according to Claim 7, **characterized in that** the reducing agent is a urea-water solution.

9. Device for the aftertreatment of exhaust gases of an internal combustion engine using a reagent, in particular a reducing agent, which is to be introduced into the exhaust gases, set up with means (40) for carrying out a method according to one of the preceding claims.

## Revendications

1. Procédé de post-traitement des gaz d'échappement d'un moteur à combustion interne en utilisant un agent réactif introduit dans les gaz d'échappement, notamment un agent réducteur, selon lequel l'agent réducteur est pompé à l'aide d'un dispositif de transfert (4) notamment d'une pompe à partir d'un réservoir d'agent réactif (1) vers un dispositif de dosage (7 ; 80), notamment une soupape de dosage, de façon qu'après ouverture du dispositif de dosage, l'agent réactif soit introduit de façon dosée dans la conduite des gaz d'échappement du moteur à combustion interne,
une conduite de retour (12, 75) renvoyant l'agent réactif du dispositif de transfert (4) vers le réservoir d'agent réactif (1),
**caractérisé en ce que**
l'agent réactif circule entre le dispositif de transfert (4) et le réservoir d'agent réactif (1),
notamment lorsque le dispositif de dosage est fermé, on évite ainsi que l'agent réactif ne gèle,
la circulation se faisant entre le réservoir d'agent réactif et un module de transfert (61 ; 661 ; 761) comportant le dispositif de transfert,
le module de transfert étant relié au dispositif de dosage (7 ; 80) par une conduite d'alimentation (76) non concernée par la circulation, et
la circulation ne se produit que si la température de l'air extérieur ou de l'agent réactif dans le réservoir d'agent réactif passe en dessous d'un seuil (830).

2. Procédé selon la revendication 1,
**caractérisé en ce que**
la circulation est continue.

3. Procédé selon la revendication 1 ou 2,
**caractérisé en ce qu'**
après un fonctionnement en mode de dosage, la conduite d'alimentation (76) vers le dispositif de dosage (7 ; 80) est rincée avec un gaz, notamment avec de l'air comprimé pour expulser l'agent réactif résiduel dans la conduite d'alimentation après le dosage.

4. Procédé selon l'une des revendications précédentes,
**caractérisé en ce que**
la circulation se fait à des moments au cours desquels on n'introduit pas d'agent réactif dans la conduite des gaz d'échappement.

5. Procédé selon l'une des revendications précédentes,
**caractérisé en ce que**
la circulation peut également se faire lorsque le moteur à combustion interne est arrêté.

6. Procédé selon la revendication 5,
**caractérisé en ce que**
la circulation ne se fait que si, ou encore aussi longtemps ou encore lorsque le réseau électrique du véhicule équipé par le moteur à combustion interne dispose de réserve d'énergie suffisante pour faire redémarrer le moteur à combustion interne.

7. Procédé selon l'une quelconque des revendications précédentes,
**caractérisé en ce que**
l'agent réactif est un agent réducteur.

8. Procédé selon la revendication 7,
**caractérisé en ce que**
l'agent réducteur est une solution aqueuse d'urée.

9. Dispositif de post-traitement des gaz d'échappement d'un moteur à combustion interne utilisant un agent de réaction à introduire dans les gaz d'échappement, notamment un agent réducteur, comportant des moyens (40) pour mettre en oeuvre le procédé selon l'une des revendications précédentes.
